# EUROPEAN PATENT APPLICATION

(11) **EP 4 650 488 A1**
(43) Date of publication of application: **19.11.2025**
(21) Application number: 24305759.3
(22) Date of filing: 16.05.2024
(51) Int. Cl.: C25B 1/04, C25B 9/77, C25B 15/08

(54) **HYDROGEN AND OXYGEN DEPLETING SYSTEM WITHIN A WATER ELECTROLYSIS INSTALLATION AND RELATED PROCESS**

(71) Applicant: TotalEnergies OneTech, 92400 Courbevoie (FR)
(72) Inventor: AYMÉ-PERROT, David, 92400 Courbevoie (FR); DUBOUIS, Nicolas, 92400 Courbevoie (FR); ZHANG, Shimin, 92400 Courbevoie (FR)
(74) Representative: Lavoix

(57) **Abstract**

The invention concerns a water electrolysis installation comprising:
* a dioxygen separator (60) configured to separate a mixture of electrolyte and dioxygen (28B) and to obtain an electrolyte with dissolved dioxygen (61);
* a dihydrogen separator (49) to separate a mixture of electrolyte and dihydrogen (28A) and to obtain an electrolyte with dissolved dihydrogen (51);
* a recombination zone (32) configured to receive the electrolytes to produce, at a mixing region (68), a mixed electrolyte stream,

The installation comprises a dihydrogen and/or dioxygen depleting system (70), comprising a catalyst configured to react dioxygen and dihydrogen dissolved in the mixed electrolyte stream, to produce a treated electrolyte stream (34) with reduced dioxygen and dihydrogen. The depleting system (70) is positioned in contact with the mixed electrolyte stream downstream of the mixing region (68) and upstream of the inlet of the electrochemical stack device.

## Description

The present invention concerns a water electrolysis installation comprising:
- an electrochemical stack device comprising at least a cell stack having at least one electrolysis cell for electrochemical generation of dihydrogen and dioxygen from an electrolyte, wherein the or each electrolysis cell has an anodic compartment containing an anode, a cathodic compartment containing a cathode and optionally one or more separator separating the anodic compartment and the cathodic compartment;
- a balance of plant connected to an inlet of the electrochemical stack device, to convey an electrolyte to the inlet of the electrochemical stack device, the balance of plant comprising:
   * a dioxygen containing electrolyte recovery pipe to recover a mixture of electrolyte and dioxygen from the or each anodic compartment and a dioxygen separator configured to separate the mixture of electrolyte and dioxygen and to obtain a dioxygen stream and an electrolyte with dissolved dioxygen;
   * a dihydrogen containing electrolyte recovery pipe to recover a mixture of electrolyte and dihydrogen from the or each cathodic compartment and a dihydrogen separator to separate the mixture of electrolyte and dihydrogen and to obtain a dihydrogen stream and an electrolyte with dissolved dihydrogen;
   * a recombination zone configured to receive the electrolyte with dissolved dioxygen and the electrolyte with dissolved dihydrogen and to produce, at a mixing region, a mixed electrolyte stream, the recombination zone being connected to an inlet of the electrochemical stack device to feed the mixed electrolyte stream to the electrochemical stack device;
- an electric current supply to supply a electric current between the anode and the cathode of the or each cell.

Water electrolysis has been developed for decades. When water is subjected to an electrochemical driving force, a thermodynamic minimum potential difference of 1.23 V at room temperature (298.15 K) is required to shift the equilibrium from H₂O towards hydrogen and oxygen. Practically, beyond the thermal equilibrium voltage of 1,48V, the hydrogen evolution rection (HER) takes place at the negative electrode while the oxygen evolution (OER) reaction takes place at the positive electrode. The total reaction is H₂O(l) → H₂(g) + ½ O₂(g). the electrolysis reaction occurs, converting water molecules into dihydrogen and dioxygen.

The produced dihydrogen (H₂) and dioxygen (O₂) gas can be further utilized in various commercial and industrial applications. For example, dihydrogen can be a clean fuel and dioxygen can be used in medical services.

Electrolyzers are incorporated inside a water electrolysis installation to convert water into dihydrogen and dioxygen using an electrical current.

They generally comprise stacks of several electrochemical cells. In each cell, dihydrogen is produced at a negative electrode (cathode) separated by a membrane from the positive electrode (anode) where dioxygen is produced.

However, the generated dihydrogen and dioxygen gas during the water electrolysis can diffuse through the membranes and contact each other in the electrochemical cells, which possibly leads to unexpected gas mixing where the relatively high dihydrogen and dioxygen concentrations can lead to catastrophic explosions susceptible of causing material and/or human damages.

Consequently, an electrolyzer stack should be shut down for safety concern if the dihydrogen to dioxygen ratio in the anodic compartment reaches a level of 2%, limiting the energy efficiency of the device and raising the dihydrogen production cost.

Therefore, there are needs for avoiding the contact of generated dihydrogen and dioxygen within the electrochemical cells. A publication by Ito et al., entitled "Cross-permeation and consumption of dihydrogen during proton exchange membrane electrolysis", International Journal of Hydrogen Energy, Volume 41, Issue 45, 7 December 2016, Pages 20439-20446, reported a recombination layer consisting of a platinum based reversed catalyst coated on the membrane, integrated in a proton exchange membrane electrolysis device. This recombination layer spontaneously recombines dioxygen and dihydrogen to form water molecules, and thus reduces the impact of dihydrogen crossover.

In Ito's device, the said proton exchange membrane electrolysis uses a polymer electrolyte, which permits the incorporation/deposit of the recombination layer. In contrast, for cells designed for alkaline electrolytes, the membrane is a porous substrate, making it difficult to set up a recombination.

When the water electrolysis takes place in a stack, the production of mixtures of gas and electrolyte is conveyed out of the stack. The dihydrogen and dioxygen outlets of the stack are connected to gas separators to separate the respective gas and electrolyte. The dihydrogen is then generally purified by removing remaining water traces.

Downstream of the separators, two types of architectures are known in alkaline electrolysis.

The first type of architecture comprises two separate recirculation loops of electrolyte, one connected to the anodic compartments of the electrolyzer stacks, the other one connected to the cathodic compartments of the electrolyzer stacks. This approach avoids a mixing of the gases coming from the anodic compartments and from the cathodic compartments.

However, since water is consumed at the cathode and generated at the anode a change/gradient in electrolyte concentration occurs. The concentration imbalance of the electrolyte streams is detrimental, as it causes efficiency losses in the electrolyzer performance.

Consequently, in a second type of architecture, more used, the recycled electrolytes are usually mixed together to balance the concentration gradients. The electrolyte concentration is thus balanced, but dihydrogen and dioxygen are both present in the recycled electrolyte.

The mixing of these two gases in electrolyte recirculating in the balance of plant therefore increases the initial concentration of dissolved dihydrogen in the electrolyte entering the anodic compartment (the same for dioxygen in the cathodic compartment) which reduces the amount of dihydrogen that can pass through the membrane before reaching the safety limit of 2% HTO (hydrogen to oxygen ratio), which further requires shutting down the installation to keep operating safely.

One aim of the invention is to provide a safer and more reliable water electrolysis installation with aqueous electrolytes, while limiting the content of dihydrogen and dioxygen gas in the electrolyte during the passage in the electrochemical stack or during the recirculation in the balance of plant.

To this aim, the subject matter of the invention is a water electrolysis installation of the above mentioned type, characterized by a dihydrogen and/or dioxygen depleting system, comprising at least one catalyst configured to react dioxygen and dihydrogen dissolved in the mixed electrolyte stream, to produce a treated electrolyte stream with reduced dioxygen and dihydrogen, the dihydrogen and/or dioxygen depleting system being positioned in contact with the mixed electrolyte stream downstream of the mixing region and upstream of the inlet of the electrochemical stack device..

The dihydrogen and dioxygen depleting system is positioned in contact with the mixed electrolyte stream downstream of the mixing region and upstream of the upstream inlet of the electrical stack device.

Thanks to this dihydrogen and dioxygen depleting system, the content of respective dihydrogen and dioxygen in the electrolyte is reduced when entering the electrochemical stack. This eventually ensures a safer and reliable working condition for water electrolysis installation with aqueous electrolytes.

Besides, this dihydrogen and dioxygen depleting system located downstream of the mixing region allows the treatment of the mixture of electrolytes coming from the anodic compartments and from the cathodic compartments after their separation from gases. This avoids an imbalance in the electrolyte concentration at the anode and cathode, which would otherwise continue to diverge during electrolyte recycling, due to the difference in water balance at the two electrodes.

The installation according to the invention may comprise one or more of the following feature(s), taken alone, or according to any technical feasible combination:
- The balance of plant comprises an upstream electrolyte supply pipe connected to the mixing region, an electrolyte tank tapped on the upstream electrolyte supply pipe, and a downstream electrolyte supply pipe connecting the upstream electrolyte supply pipe to the electrochemical stack device, the dihydrogen and/or dioxygen depleting system being positioned at least partly between the mixing region and the electrolyte tank tapping.
- The balance of plant comprises a water source and a water supply pipe tapped at an outlet of the upstream electrolyte supply pipe, the dihydrogen and/or dioxygen depleting system being positioned at least partly between the mixing point and the water supply pipe tapping.
- The or each catalyst is selected among one or more elements from the platinum group, in particular ruthenium, rhodium, palladium, osmium, iridium, and platinum.
- The installation or each catalyst comprises catalyst particles.
- The dihydrogen and/or dioxygen depleting system comprises a porous substrate holding the or each catalyst.
- The porous substrate is a porous substrate in particular a metal substrate such as stainless steel expanded mesh or based upon a transition metal, in particular pure nickel or a polymer substrate.
- The or each catalyst is positioned on the surface of the porous substrate.
- The or each catalyst is contained in a paint applied on a surface configured to be in contact with the mixed electrolyte stream, in particular a surface of a pipe in which the mixed electrolyte stream circulates or a surface of a support positioned in the pipe in which the mixed electrolyte stream circulates.
- The paint comprises particles of the or each catalyst and at least a polymeric binder.
- The polymeric binder comprises a fluorinated polymer in particular polyvinylidene fluoride and/or polytetrafluoroethylene.
- The electrochemical stack device comprises an alkaline cell stack, the electrolyte being an alkaline electrolyte, in particular an aqueous potassium hydroxide solution with a potassium hydroxide concentration greater that 0.1 % in mass and preferably comprised between 1% in mass and 45% in mass.

The invention also concerns a water electrolysis process comprising:
- conveying an electrolyte to the inlet of an electrochemical stack device from a balance of plant, the electrochemical stack device comprising at least a cell stack having at least one electrolysis cell for electrochemical generation of dihydrogen and dioxygen from the electrolyte, wherein the or each electrolysis cell has an anodic compartment containing an anode, a cathodic compartment containing a cathode and optionally one or more separator separating the anodic compartment and the cathodic compartment;
- supplying an electric current between the anode and the cathode of the or each cell to generate dihydrogen in the cathodic compartment and dioxygen in the anodic compartment;
- recovering a mixture of electrolyte and dioxygen from the or each anodic compartment in a dioxygen containing electrolyte recovery pipe of the balance of plant and separating the mixture of electrolyte and dioxygen in a dioxygen separator of the balance of plant to obtain a dioxygen stream and an electrolyte with dissolved dioxygen;
- recovering a mixture of electrolyte and dihydrogen from the or each cathodic compartment in a dihydrogen containing electrolyte recovery pipe of the balance of plant and separating the mixture of electrolyte and dihydrogen in a dihydrogen separator of the balance of plant to obtain a dihydrogen stream and an electrolyte with dissolved dihydrogen;
- receiving the electrolyte with dissolved dioxygen and the electrolyte with dissolved dihydrogen in a recombination zone of the balance of plant and producing, at a mixing region, a mixed electrolyte stream, and feeding the mixed electrolyte stream from the recombination zone to the inlet of the electrochemical stack device ;
characterized by reacting dioxygen and dihydrogen comprised in the mixed electrolyte stream with a dihydrogen and/or dioxygen depleting system comprising at least one catalyst, and producing a treated electrolyte stream with reduced dioxygen and dihydrogen, the dihydrogen and/or dioxygen depleting system being positioned in contact with the mixed electrolyte stream downstream of the mixing region and upstream of the upstream inlet of the electrochemical stack device.

The process according to the invention may comprise one or more of the following features, taken solely, or according to any technical feasible combination:
- The dihydrogen content in the treated electrolyte stream with dissolved dioxygen and dihydrogen being introduced into the electrochemical stack device is below saturation.
- Reacting dioxygen and dihydrogen comprised in the mixed electrolyte stream with a dihydrogen and/or dioxygen depleting system is carried out at a temperature comprised between 25°C and 95°C.

The invention will be better understood, based on the following description, made in reference to the amended drawings, in which:
- figure 1 is a schematic representation of a water electrolysis installation according to the invention;
- figure 2 is schematic view of details of the installation of figure 1 showing the recombination zone as well as a dihydrogen and dioxygen depleting system inside the balance of plant of a water electrolysis installation according to the invention.

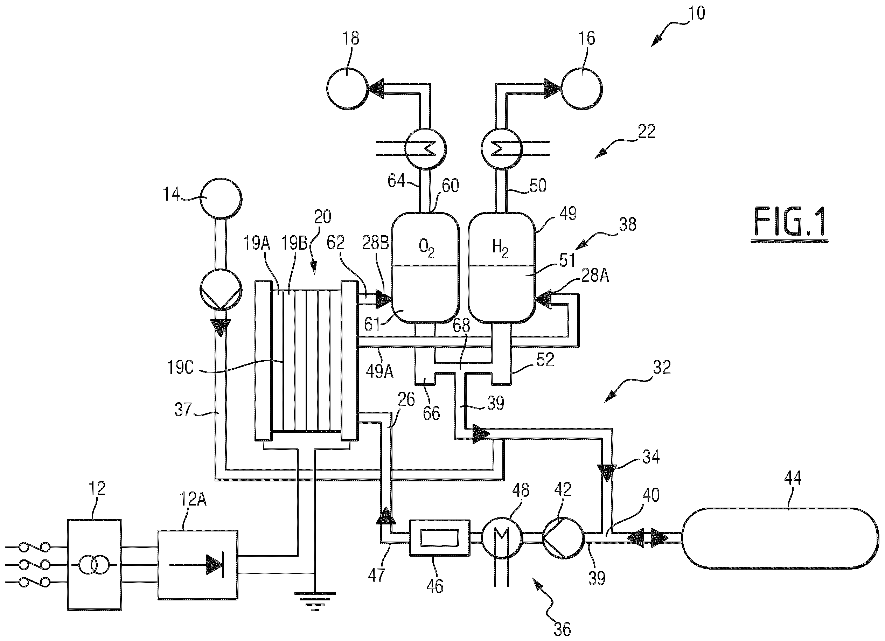

A first water electrolysis process according to the invention is carried out in a water electrolysis installation 10 according to the invention, schematically shown in figure 1.

The installation 10 is connected to an electric source 12, advantageously via a rectifier 12A and to a water source 14 for the production of dihydrogen 16 and dioxygen 18.

In the embodiment of figure 1, the water electrolysis installation 10 is carrying out alkaline water electrolysis using an electrolyte based on a lye comprising for example potassium hydroxide.

The electric source 12 is for example a renewable energy source, such as a solar farm, a tidal farm or a wind farm, or is a battery system, a power grid or any device supplying electricity.

The installation 10 comprises an electrochemical stack device 20, where the electrochemical reactions take place, and a balance of plant 22 connected to the electrochemical stack device 20. The balance of plant 22, comprises various fluid handling components, including pipes, reservoirs, tanks, separators, which will be described below.

The balance of plant 22 is configured to convey at least an incoming electrolyte 26 to an inlet of the electrochemical stack device 20 and to recover outcoming fluids 28A, 28B from outlets of the electrochemical stack device 20.

Outcoming fluids 28A, 28B, here respectively represent a mixture of electrolyte and dihydrogen 28A and a mixture of electrolyte and dioxygen 28B are gathered respectively from the cathodic compartments 19A and from the anodic compartment 19B of the cells 19 and are recovered outside the electrochemical stack device 20.

The electrochemical stack device 20 thus defines at least an incoming electrolyte 26 supply inlet and at least two outcoming fluid 28A, 28B recovery outlets, through which it is connected to the balance of plant 22.

The electrochemical stack device 20 comprises at least an electrochemical cell 19, a frame receiving each cell 19 and an outer enclosure containing the frames (not shown).

Each cell 19 comprises at least two electrodes , respectively an anode and a cathode, immersed in an electrolyte. The two electrodes are separated by one or more separator 19C. The cells 19 are for example arranged in rows defining a stack.

The cathode is contained in a cathodic compartment 19A where the dihydrogen is produced. The anode is contained in an anodic compartment 19B where the dioxygen is produced.

Water electrolysis takes place by providing electrolyte in each anodic compartment 19B of each cell 19 (the electrolyte being then referred to as "anolyte") and in each cathodic compartments 19A of each cell 19 (the electrolyte being then referred to as "catholyte") and by providing an electric current from the source 12 between the cathode and the anode of each cell 19.

The separator 19C comprises a membrane or a diaphragm that limits gas present in each compartment 19A, 19B to pass through, in particular dihydrogen and dioxygen produced at each electrode, to contact each other. The separator is an electron insulator to prevent short-circuits.

In the case of alkaline electrolysis, the diaphragm is generally a polymer membrane, for example a polyphenylene sulfide membrane (PPS) or a composite material made of a polymer material and of an inorganic material (for example polysulfone and zirconia), or asbestos.

Each cell 19 receives a supply of electric current from the electric source 12 through the rectifier 12A and a current distributor (not shown).

The balance of plant 22 imports water from the water source 14 to the water electrolysis installation 10 to produce and supply electrolyte to the electrochemical stack device 20 and exports dihydrogen 16 and dioxygen 18 produced in the electrochemical stack device 20 outside of the water electrolysis installation 10.

Advantageously, the balance of plant 22 also comprises a downstream dihydrogen purification stage and a dioxygen purification stage (not shown in the figure 1).

The balance of plant 22 comprises an upstream circuit 36 to prepare and feed incoming electrolyte 26 to the electrochemical stack device 20, and a downstream circuit 38 to recover and treat outcoming fluids 28A, 28B produced in the electrochemical stack device 20 and recycle electrolyte to the upstream circuit 36.

The downstream circuit 38 comprises a dihydrogen containing electrolyte recovery pipe 49A and a dioxygen containing electrolyte recovery pipe 62, located at the downstream of the electrochemical stack device 20, configured to receive respectively the mixture of electrolyte and dihydrogen 28A and the mixture of electrolyte and dioxygen 28B produced in the electrochemical stack device 20.

The dihydrogen containing electrolyte recovery pipe 49A is connected to a dihydrogen separator 49.

The dihydrogen separator 49 is a gas/liquid separator configured to separate the mixture of electrolyte and dihydrogen 28A into gaseous dihydrogen 16 and an electrolyte with dissolved dihydrogen 51 (at saturation) to be recycled. The dihydrogen stream is purified by dihydrogen purification stage.

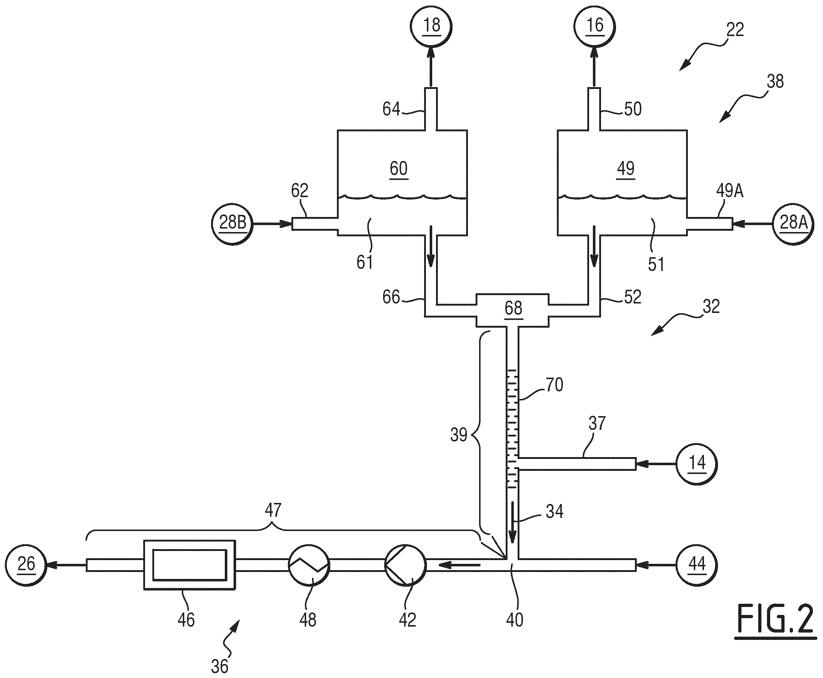

As shown in figure 2, the dihydrogen separator 49 hence is tapped to a dihydrogen recovery pipe 50, which introduces the dihydrogen stream to the dihydrogen purification stage, and a first electrolyte recycle pipe 52, which evacuates the electrolyte with dissolved dihydrogen 51 from the dihydrogen separator 49.

Similarly, the dioxygen containing electrolyte recovery pipe 62 is connected to a dioxygen separator 60.

The dioxygen separator 60 is a gas/liquid separator configured to separate the mixture of electrolyte and dioxygen 28B into gaseous dioxygen 18 and an electrolyte with dissolved dioxygen 61 (at saturation) to be recycled. The dioxygen stream is purified by dioxygen purification stage.

The dioxygen separator 60 hence is tapped to a dioxygen recovery pipe 64, which introduces the dioxygen stream to the dioxygen purification stage, and a second electrolyte recycle pipe 66, which evacuates the electrolyte with dissolved dioxygen 61 from the dioxygen separator 60.

The downstream circuit 38 further comprises a recombination zone 32, located at the downstream of the first electrolyte recycle pipe 52 and the second electrolyte recycle pipe 66, configured to receive and mix the recovered electrolyte streams 51 and 61 from two gas/liquid separators 49 and 60, treat the mixed electrolyte stream, and produce a treated electrolyte stream 34.

The first and second electrolyte recycle pipes 52 and 66 are thus connected to the recombination zone 32 and merge at a mixing region 68.

The recombination zone 32 further comprises an upstream electrolyte supply pipe 39 at the downstream of the mixing region 68, receiving the mixed electrolyte stream.

The recombination zone 32 is connected to the water source 14 via a water supply pipe 37, tapped on the upstream electrolyte supply pipe 39, to receive purified water from the water source 14. The mixed electrolyte stream flowing in the upstream electrolyte supply pipe 39 is replenished with purified water supplied by the water source 14.

The upstream electrolyte supply pipe 39 is connected to the upstream circuit 36 via a tapping 40 to feed the treated electrolyte stream 34 to the upstream circuit 36.

The upstream circuit 36 comprises an electrolyte tank 44, where electrolyte is prepared and stored, and a downstream electrolyte supply pipe 47, connecting the electrolyte tank 44 to the incoming fluid inlet of the electrochemical stack device 20.

The upstream circuit 36 comprises a pump 42 and advantageously, an electrolyte filter 46, in particular a lye filter, interposed on the downstream electrolyte supply pipe 47 between the electrolyte tank 44 and the incoming fluid inlet of the electrochemical stack device 20. The upstream circuit 36 further comprises a chiller 48, interposed on the downstream electrolyte supply pipe 47 between the pump 42 and the electrolyte filter 46.

The electrolyte tank 44 is a tank containing a concentrated electrolyte solution. The electrolyte is for example a potassium hydroxide solution with a concentration greater than 0.1 mol per liter of electrolyte; or an alkali-hydroxide solution (NaOH, LiOH, CsOH) with a concentration greater than 0.1 mol per liter of electrolyte; or the mixture of a solution of alkali hydroxide with a concentration greater than 0.1 mol per liter and an additive such as vanadium oxide (V₂O₅) with a concentration greater than 1 g per liter.

In particular, the electrolyte comprises an aqueous potassium hydroxide solution with a potassium hydroxide concentration greater that 0.1 % in mass and preferably comprised between 1% in mass and 45% in mass.

The electrolyte filter 46 is configured to filter the electrolyte to remove solids, such as lye precipitates, from the electrolyte. The filter is for example a Y-filter mounted with a sieve with a pore size less than 10 micrometers.

In the example of figure 2, the mixture of electrolyte and dihydrogen 28A and the mixture of electrolyte and dioxygen 28B are gathered respectively from the cathodic compartments 19A and from the anodic compartment 19B of the cells 19 and are recovered separately in the dihydrogen separator 49 and the dioxygen separator 60.

In the example of figure 2, the recovered electrolyte streams 51 and 61 from two gas/liquid separators 49 and 60 are mixed in the mixing region 68, where the first and second electrolyte recycle pipes 52 and 66 merge.

The outlet of the mixing region 68 is tapped to the upstream electrolyte supply pipe 39, which receives the mixed electrolyte stream.

The upstream electrolyte supply pipe 39 is connected to the downstream electrolyte supply pipe 47 via the tapping 40 to convey the treated electrolyte stream 34 to the upstream of the upstream circuit 36.

The balance of plant 22 comprises, within the upstream electrolyte supply pipe 39, a dihydrogen and/or dioxygen depleting system 70, where at least part of the upstream electrolyte supply pipe 39 contains at least a catalyst to react dihydrogen with dioxygen.

In the example of figure 2, the dihydrogen and/or dioxygen depleting system 70 is preferably located between the mixing region 68 and the tapping 40.

The water supply pipe 37 is tapped on the upstream electrolyte supply pipe 39. The dihydrogen and/or dioxygen depleting system 70 is preferably positioned between the mixing region 68 and the water supply pipe 37 or at least partly between the mixing region 68 and the water supply pipe 37.

The mixed electrolyte stream flows through the dihydrogen and/or dioxygen depleting system 70, where it contacts the catalyst and the dissolved dihydrogen and dioxygen are converted to water, leading to a decrease of the content of dihydrogen and dioxygen in the mixed electrolyte stream.

The incoming electrolyte 26 hence consists of the treated electrolyte stream 34 and the concentrated fresh electrolyte solution supplied by the electrolyte tank 44.

The or each catalyst comprises particles of at least one element selected from the platinoid group, in particular, ruthenium, rhodium, palladium, osmium, iridium, and platinum. It is advantageously supported on carbon particles to increase their active surface area.

In a first example, the or each catalyst is dispersed on a porous substrate, which presents a porosity configured to limit load losses during the circulation of the electrolyte in the piping. The porosity of the metallic substrate is for example comprised between 10 % and 95 %.

The porous substrate is made of materials stable in corrosive medium, in particular, lye with 30% in mass of KOH in the presence of dissolved dihydrogen gas and dissolved dioxygen gas. Preferably, it can comprise stainless steel expanded mesh or be based upon a transition metal, in particular, pure nickel.

The or each catalyst is for example in form of particles with number average size comprised between 0.1 µm and 100 µm in diameter.

In a variant or in complement, the catalyst is formulated as a paint. The paint comprises the or each catalyst, preferably in form of particles and of at least one polymer binder.

The paint is for example applied on at least part of the inner surface of the upstream electrolyte supply pipe 39. Alternatively, or in complement, the paint is applied on the surface of a support positioned within at least part of the upstream electrolyte supply pipe 39.

The polymeric binder of the paint comprises at least one polymer binder that is chemically stable in basic media, preferably fluorinated polymers selected from polyvinylidene fluoride (PVDF) and/or polytetrafluoroethylene (PTFE).

The content of catalysts in the paint is between 10% in mass and 98% in mass with respect to the total mass of the paint, for example between 25% in mass and 98% in mass with respect to the total mass of the paint. The content of polymer binds in the paint is between 2% in mass and 90% in mass with respect to the total mass of the paint, for example between 2% in mass and 75% in mass with respect to the total mass of the paint.

A water electrolysis process according to the invention will now be described.

Electrolyte is provided to the inlet of the electrochemical stack device 20. The electrolyte comprises recycled electrolyte from the two separators 49, 60 provided by the first and second electrolyte recycle pipes 52, 66.

The electrolyte also advantageously comprises fresh electrolyte supplied from the tank 44.

An electrical current is simultaneously supplied to the electrochemical stack device 20 and electrochemical reactions, as described above, occur within the stacks of cells of the electrochemical stack device 20 to convert the electrolyte within the electrolyte within the cathodic compartments 19A (also referred to as "catholyte") and in the anodic compartments 19B (also referred to as "anolyte") to respective outcoming fluids 28A, 28B.

The outcoming fluids 28A, 28B from the electrochemical stack device 20 are respectively a mixture of electrolyte and dihydrogen 28A arising from the cathodic compartments 19A and a mixture of electrolyte and dioxygen 28B arising from the anodic compartments 19B.

The mixture of electrolyte and dihydrogen 28A is conducted to the dihydrogen separator 49 through the dihydrogen containing electrolyte recovery pipe 49A. In the dihydrogen separator 49, dihydrogen in gas phase is separated from electrolyte to be recycled.

A dihydrogen stream is transferred from the dihydrogen separator 49 in the dihydrogen recovery pipe 50 and is transported to the purification stage for further treatment and/or use.

The electrolyte with dissolved dihydrogen 51 is then conveyed via the first electrolyte recycle pipe 52 to the mixing region 68.

Similarly, the outcoming fluid 28B is conducted to the dioxygen separator 60 through the dioxygen containing electrolyte recovery pipe 62. In the dioxygen separator 60, dioxygen in gas phase is separated from electrolyte to be recycled.

A dioxygen stream is transferred from the dioxygen separator 60 in the dioxygen recovery pipe 64 and is advantageously transported to the purification stage for further treatment and/or use, or to a vent.

The electrolyte with dissolved dioxygen 61 is then conveyed via the second electrolyte recycle pipe 66 to the mixing region 68.

The electrolyte with dissolved dihydrogen 51 and the electrolyte with dissolved dioxygen 61 are mixed in the mixing region 68 to produce a mixed electrolyte stream, containing residual dioxygen and dihydrogen content, the respective concentrations will be below saturation.

As shown in the figure 2, the mixed electrolyte stream flows through the dihydrogen and/or dioxygen depleting system 70 set in the upstream electrolyte supply pipe 39.

The dihydrogen and dioxygen dissolved in the mixed electrolyte stream contact the catalysts loaded in the dihydrogen and/or dioxygen depleting system 70, and are converted to water via the recombination reaction: 2H₂ + O₂ → 2H₂O.

In the dihydrogen and/or dioxygen depleting system 70, the temperature is adjusted between 5°C and 150°C, and the pressure is adjusted between 0.1 bar and 300 bar.

The solubility of the dihydrogen and dioxygen gas can vary with temperature of the electrolyte. When the temperature is between 25°C and 95°C, for example between 25°C and 65°C, the ratio of dihydrogen/dioxygen dissolved in the electrolyte is between 1 and 2, which leads to a good recombination yield up to 100%.

The purified water is supplied to the mixed electrolyte stream via the water supply pipe 37, tapped on the upstream electrolyte supply pipe 39.

The dihydrogen content in the treated electrolyte stream 34 is smaller than in the mixed electrolyte stream and the dioxygen content in the treated electrolyte stream 34 is smaller than in the mixed electrolyte stream.

Advantageously, the dihydrogen dissolved in mixed electrolyte stream is at saturation, whereas the dihydrogen dissolved in the treated electrolyte stream 34 is below saturation.

Again advantageously, the dioxygen dissolved in mixed electrolyte stream is at saturation, whereas the dioxygen dissolved in the treated electrolyte stream 34 is below saturation.

The treated electrolyte stream 34 is conveyed to the upstream circuit via the tapping 40 at the downstream of the electrolyte tank 44 and at the upstream of the pump 42. The treated electrolyte stream 34 is hence mixed with the fresh concentrated electrolyte solution supplied by the electrolyte tank 44 to form the incoming electrolyte 26 that are introduced to the electrochemical stack device 20.

Alternatively, the said particles of catalysts are blended with polymer binders to form a paint. The paint is applied on the inner surface of the dihydrogen and/or dioxygen depleting system 70, or on the surface of a support that is plugged in the dihydrogen and/or dioxygen depleting system 70.

With the water electrolysis method according to the invention, it is possible to reduce the content of dihydrogen and dioxygen dissolved in the electrolyte in the electrochemical stack device 20, as well as in the balance of plant 22. The risk of explosion due to the undesirable contact between dihydrogen and dioxygen is limited, leading to a significantly improvement in working safety and continuity of a water electrolysis system with aqueous electrolytes.

In addition, the water electrolysis method according to the invention allows a direct mixture of the catholyte and the anolyte recovered from the electrochemical stack device 20. It thus avoids treating and recycling the catholyte and the anolyte separately, which eventually heals the division of the electrolyte concentration between the recycled catholyte and the anolyte during multiple rounds of electrolyte circulation. Therefore, the method of the invention further ensures a sustainable working condition for a water electrolysis system.

## Claims

1. A water electrolysis installation (10), comprising:
- an electrochemical stack device (20) comprising at least a cell stack having at least one electrolysis cell for electrochemical generation of dihydrogen (16) and dioxygen (18) from an electrolyte, wherein the or each electrolysis cell has an anodic compartment (19B) containing an anode, a cathodic compartment (19A) containing a cathode and optionally one or more separator (19C) separating the anodic compartment (19B) and the cathodic compartment (19A);
- a balance of plant (22) connected to an inlet of the electrochemical stack device (20), to convey an electrolyte to the inlet of the electrochemical stack device (20), the balance of plant (22) comprising:
* a dioxygen containing electrolyte recovery pipe (62) to recover a mixture of electrolyte and dioxygen (28B) from the or each anodic compartment (19B) and a dioxygen separator (60) configured to separate the mixture of electrolyte and dioxygen (28B) and to obtain a dioxygen stream (18) and an electrolyte with dissolved dioxygen (61);
* a dihydrogen containing electrolyte recovery pipe (49A) to recover a mixture of electrolyte and dihydrogen (28A) from the or each cathodic compartment and a dihydrogen separator (49) to separate the mixture of electrolyte and dihydrogen (28A) and to obtain a dihydrogen stream (16) and an electrolyte with dissolved dihydrogen (51);
* a recombination zone (32) configured to receive the electrolyte with dissolved dioxygen (61) and the electrolyte with dissolved dihydrogen (51) and to produce, at a mixing region (68), a mixed electrolyte stream, the recombination zone (32) being connected to an inlet of the electrochemical stack device to feed the mixed electrolyte stream to the electrochemical stack device (20);
- an electric current supply (12) to supply a electric current between the anode and the cathode of the or each cell ;
**characterized by** a dihydrogen and/or dioxygen depleting system (70), comprising at least one catalyst configured to react dioxygen and dihydrogen dissolved in the mixed electrolyte stream, to produce a treated electrolyte stream (34) with reduced dioxygen and dihydrogen, the dihydrogen and/or dioxygen depleting system (70) being positioned in contact with the mixed electrolyte stream downstream of the mixing region (68) and upstream of the inlet of the electrochemical stack device (20).

2. The installation (10) according to claim 1, wherein the balance of plant (22) comprises an upstream electrolyte supply pipe (39) connected to the mixing region (68), an electrolyte tank (44) tapped on the upstream electrolyte supply pipe (39), and a downstream electrolyte supply pipe (47) connecting the upstream electrolyte supply pipe (39) to the electrochemical stack device (20), the dihydrogen and/or dioxygen depleting system (70) being positioned at least partly between the mixing region (68) and the electrolyte tank tapping.

3. The installation (10) according to any of claim 1 or 2, wherein the balance of plant (22) comprises a water source (14) and a water supply pipe (37) tapped at an outlet of the upstream electrolyte supply pipe (39), the dihydrogen and/or dioxygen depleting system (70) being positioned at least partly between the mixing point (68) and the water supply pipe tapping.

4. The installation (10) according to any one of the preceding claims, wherein the or each catalyst is selected among one or more elements from the platinum group, in particular ruthenium, rhodium, palladium, osmium, iridium, and platinum.

5. The installation (10) according to any one of the preceding claims, wherein the or each catalyst comprises catalyst particles.

6. The installation (10) according to any one of the preceding claims, wherein the dihydrogen and/or dioxygen depleting system (70) comprises a porous substrate holding the or each catalyst.

7. The installation (10) according to claim 6, wherein the porous substrate is a porous substrate in particular a metal substrate such as stainless steel expanded mesh or based upon a transition metal, in particular pure nickel or a polymer substrate.

8. The installation (10) according to any one of claims 6 or 7, wherein the or each catalyst is positioned on the surface of the porous substrate.

9. The installation (10) according to any one of the preceding claims, wherein the or each catalyst is contained in a paint applied on a surface configured to be in contact with the mixed electrolyte stream, in particular a surface of a pipe in which the mixed electrolyte stream circulates or a surface of a support positioned in the pipe in which the mixed electrolyte stream circulates.

10. The installation (10) according to claim 9, wherein the paint comprises particles of the or each catalyst and at least a polymeric binder.

11. The installation (10) according to claim 10, wherein the polymeric binder comprises a fluorinated polymer in particular polyvinylidene fluoride (PVDF) and/or polytetrafluoroethylene (PTFE).

12. The installation (10) according to any one of the preceding claims, wherein the electrochemical stack device (20) comprises an alkaline cell stack, the electrolyte being an alkaline electrolyte, in particular an aqueous potassium hydroxide solution with a potassium hydroxide concentration greater that 0.1 % in mass and preferably comprised between 1% in mass and 45% in mass.

13. A water electrolysis method comprising:
- conveying an electrolyte to the inlet of an electrochemical stack device (20) from a balance of plant (22), the electrochemical stack device (20) comprising at least a cell stack having at least one electrolysis cell for electrochemical generation of dihydrogen (16) and dioxygen (18) from the electrolyte, wherein the or each electrolysis cell has an anodic compartment (19B) containing an anode, a cathodic compartment (19A) containing a cathode and optionally one or more separator separating the anodic compartment (19B) and the cathodic compartment (19A);
- supplying an electric current between the anode and the cathode of the or each cell to generate dihydrogen (16) in the cathodic compartment (19A) and dioxygen (18) in the anodic compartment (19B);
- recovering a mixture of electrolyte and dioxygen (28B) from the or each anodic compartment (19B) in a dioxygen containing electrolyte recovery pipe (62) of the balance of plant (22) and separating the mixture of electrolyte and dioxygen (28B) in a dioxygen separator (60) of the balance of plant (22) to obtain a dioxygen stream (18) and an electrolyte with dissolved dioxygen (61);
- recovering a mixture of electrolyte and dihydrogen (28A) from the or each cathodic compartment (19A) in a dihydrogen containing electrolyte recovery pipe (49A) of the balance of plant (22) and separating the mixture of electrolyte and dihydrogen (28A) in a dihydrogen separator (49) of the balance of plant (22) to obtain a dihydrogen stream (16) and an electrolyte with dissolved dihydrogen (51);
- receiving the electrolyte with dissolved dioxygen (61) and the electrolyte with dissolved dihydrogen (51) in a recombination zone (32) of the balance of plant (22) and producing, at a mixing region (68), a mixed electrolyte stream, and feeding the mixed electrolyte stream from the recombination zone to the inlet of the electrochemical stack device (20) ;
**characterized by** reacting dioxygen and dihydrogen comprised in the mixed electrolyte stream with a dihydrogen and/or dioxygen depleting system (70) comprising at least one catalyst, and producing a treated electrolyte stream (34) with reduced dioxygen and dihydrogen, the dihydrogen and/or dioxygen depleting system (70) being positioned in contact with the mixed electrolyte stream downstream of the mixing region (68) and upstream of the upstream inlet of the electrochemical stack device (20).

14. Method according to claim 13, wherein the dihydrogen content in the treated electrolyte stream (34) with dissolved dioxygen and dihydrogen being introduced into the electrochemical stack device (20) is below saturation.

15. Method according to claims 13 and 14, wherein reacting dioxygen (16) and dihydrogen (18) comprised in the mixed electrolyte stream with a dihydrogen and/or dioxygen depleting system (70) is carried out at a temperature comprised between 25°C and 95°C.
